# EUROPEAN PATENT SPECIFICATION

(11) **EP 1 321 022 B1**
(45) Date of publication and mention of the grant of the patent: **23.01.2008**
(21) Application number: 02258693.7
(22) Date of filing: 17.12.2002
(51) Int. Cl.: A01D 34/66

(54) **Mower support frame**
Traggestell für Mäher
Chassis de support pour faucheuse

(30) Priority: 21.12.2001 GB 0130671; 18.01.2002 GB 0201130
(43) Date of publication of application: 25.06.2003
(73) Proprietor: Kverneland ASA, 4344 Kvernaland (NO)
(72) Inventor: Pedersen, Peder, 5853 Orbaek (DK)
(74) Representative: Raynor, Simon Mark

(56) References cited:
- DE-A- 19 624 396
- US-A- 4 185 445
- US-A- 4 343 138
- US-A- 4 848 069
- US-A1- 2001 003 239

## Description

This invention relates to a mower support frame from which a mower unit is suspended.

It is well known to connect individual mower units to the front and/or rear of a tractor via respective support frames, or to provide self propelled mowers having mower units mounted thereon via respective support frames.

EP 1106051 discloses the mounting of a single front mower unit on the front end of a tractor, and a tow bar connection of a pair of rear or "wing" mower units to the rear end of the trailer via a wheeled support frame on which the rear mower units are mounted.

US 4,185,445 discloses the mounting of front and rear mower units on the front and rear ends of a tractor via fixed support frames.

In the case of the arrangement shown in EP 1106051, the bar or beam on which the side mower units are connected is fixed in height relative to the wheels of the towed vehicle, and the mower units are suspended from the transverse bar or beam. Furthermore, an associated swath belt is mounted on the transverse bar also. In the arrangement shown in US 4,185,445, the mower units are connected to the transverse bar, but the bar is not suspended.

These two known arrangements suffer from disadvantages. Damage can be done in the case of the disclosure in US 4,185,445, in which there is the possibility of the mower units sliding with too much force on the ground. In the case of EP 1106051, the swath belt may not have the correct height relative to the ground because the mower unit is independently moving up and down in relation to the side beam.

It is important, for satisfactory mowing, that when the mower units encounter an obstacle on the ground, there is an inbuilt - safety mechanism which operates in order to prevent undue damage.

It is known from DE-A-19624396 to provide a mower support frame for mounting on a tractor which is provide with a mounting frame to which the support frame can be connected. The support frame comprises:
a main frame which is adapted to be mounted on the mounting frame;
a mower unit suspended from the main frame;
a parallelogram linkage connected to the main frame and which is upwardly and downwardly adjustable relative to the main frame;
a transverse beam fixed to the parrallelogram linkage for movement therewith and from which the mower unit is suspended; and
a resilient biassing means acting between the main frame and the linkage.

The present invention seeks to provide an improved support frame for a mower unit, and an associated swath belt, which is better able to support the mower unit as it engages the ground during mowing.

According to the invention there is provided a mower support frame as defined in claim 1.

Therefore, by a simple arrangement, a mower unit (and associated transversely extending swath belt) can be suspended from the transverse beam and engage the ground with less than its full weight and any inertial or other vertical movement of the mower unit is controlled by the resilient means so as to maintain the engagement of the mower unit with the ground.

In a preferred arrangement, two wing mowers are mounted on a common transverse beam, and which controls the engagement of both units with the ground.

Preferably, the parallelogram linkage is formed by two four-bar linkages, spaced apart transversely of the direction of travel, in which each four-bar linkage is formed by a forward first upright frame member which forms part of the main frame, upper and lower rearwardly extending links each pivotally connected at their forward ends to the first upright frame member, and a rearward second upright frame member to which the rear ends of the upper and lower links are pivotally connected.

The transverse beam is secured to the rearward second upright frame members of the two four-bar linkages, and when two mower units are provided, the transverse beam projects laterally to each side of the axis of the propelling vehicle to permit a respective mower unit to be suspended on each side of the axis.

Of course, instead of two separate rear upright frame members, forming respective parts of the two four-bar linkages, it is possible to replace the two second or rear upright frame members by a single composite frame structure.

The resilient biasing means preferably takes the form of a powerful tension spring.

It is preferred that a "break-away" feature is provided, and conveniently this is obtained by provision of a lost motion connection between the linkage and the main frame, and which allows limited rearward movement of the transverse beam relative to the main frame when the mower unit hits an obstacle.

The lost-motion connection may be incorporated into the rear pivot connection of the lower link to the second (rear) upright frame member, and which permits the corresponding mower unit to carry out a rearward turning movement when it hits an obstacle and thereby minimise the risk of damage. Preferably, a biasing arrangement is provided to apply a restoring force so that the transverse beam can resume its original position after the obstacle has been passed.

In a preferred arrangement, the tension spring is arranged between the main frame and the linkage in such a way that it also provides the restoring force for the lost motion connection. This may be obtained by connecting the ends of the spring obliquely between the forward upper pivot of the upper link and the lower rea r pivot of the lower link of each four-bar linkage.

A single spring may provide the restoring force for either or both of the lost-motion connections.

Conveniently, a three part transverse or beam structure is provided, having a central part which is mounted on the second (rear) upright frame members, and two outwardly extending parts, each hingedly connected to the central part. The hinge axis preferably extends parallel to the direction of travel, and also to the surface of the ground over which the apparatus travels, and the beam parts can be upwardly pivoted to an upright transport positions, whereby the two mower units can pivot inwardly to a transport position of reduced overall width of the apparatus.

However, during mowing, the central beam part and the outer beam parts are solid with each other, and the hinge axes are only utilised when the transport positions are taken-up.

In the case of a tractor being used as the propelling vehicle, it will be convenient to mount the main frame directly on the usual three point linkage at the rear of the tractor, whereby the three point linkage effectively forms the "mounting frame" on which the support frame of the invention can be mounted. However, it should be understood that the invention is also applicable to a self-propelled mower apparatus, having a mower support frame according to the invention provided thereon.

If a gang mower assembly is required, which conveniently may comprise a single forward mower unit, and a trailing pair of laterally off-set mower units, then the forward mower unit is mounted on the forward end of the tractor or propelling vehicle, and two rear mower units are mounted on the rear of the tractor or propelling vehicle via the support frame of the invention. If desired, a front mower unit may be mounted on the forward end of the tractor via a support frame according to the invention also.

When a gang mower assembly is formed, in a preferred application of the invention, each mower unit has an associated swath belt, which can be operated in a number of different modes, to provide different spreading arrangements of mown crop.

Depending upon requirements, each mower unit may distribute a single swath, separate from swaths formed from the other mower units. Alternatively, swaths may be combined to form one or more composite swath.

A preferred embodiment of mower support frame according to the invention will now be described in detail, by way of example only, with reference to the accompanying drawings, in which:
Figure 1 is a schematic illustration, in side view, of the suspended mounting of a mower unit on a mower support frame according to the invention, with the mower unit engaging the ground with part of its weight supported by the ground;
Figure 2 is a diagrammatic illustration, and in side view, showing in more detail how a rear mower unit is mounted on a rear three point hitch or lifting device of a tractor;
Figure 3 is a schematic plan view corresponding to Figure 2;
Figure 4 is a rear view corresponding to Figures 2 and 3; and
Figures 5a, b, c and d show different modes of operation of mower units of a mower support frame according to the invention, showing different swath deposition patterns which may be formed.

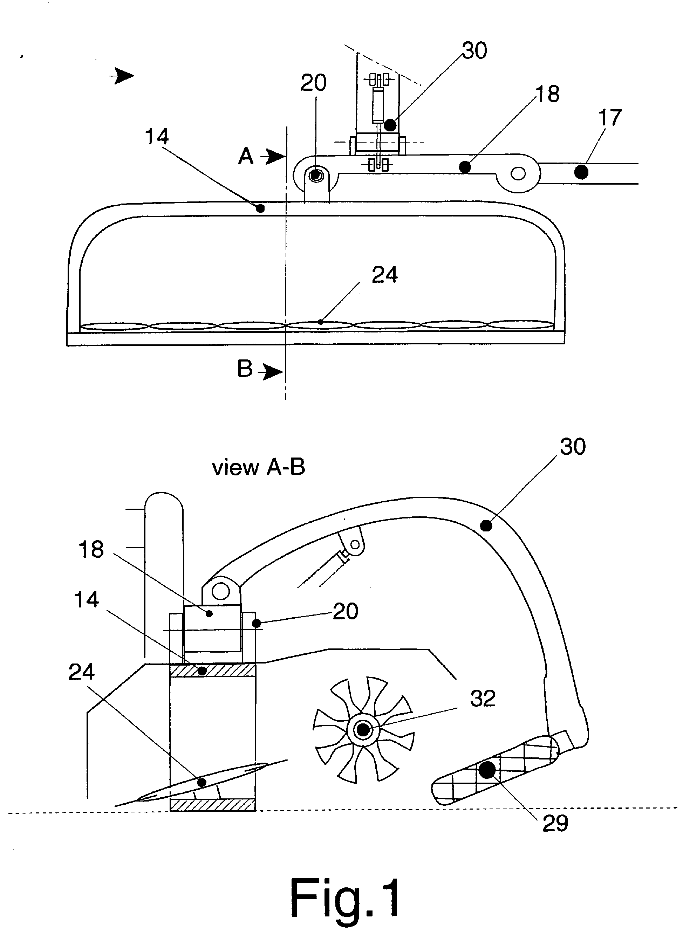

Referring first to Figures 1 to 4 of the drawings, a mower support frame according to the invention is designated generally by reference 10 and is intended to be mounted on a tractor or other propelling vehicle which is provided with a mounting frame to which the support frame can be connected. In the illustrated embodiment, a tractor 11 is provided with a standard three point linkage 12 which effectively forms a mounting frame to which the support frame of the mower 10 can be connected.

The mower support frame 10 comprises a basic or main frame 13 which is adapted to be mounted on the mounting frame 12. A mower unit designated generally by reference 14 is mounted on the support frame 10, and in practice a pair of rear or "wing" mower units 14 will be provided on the support frame 10.

A parallelogram linkage 15 is connected to the main frame 13 and is upwardly and downwardly adjustable relative to the main frame 13. The mower unit 14 engages the ground with part of the weight of the mower unit supported by the ground.

A transverse beam 16 is fixed to a rear part of the parallelogram linkage 15, and is movable upwardly and downwardly therewith. The transverse beam 16 comprises a central part 17 and two outwardly extending parts 18, each hingedly connected to the central part 17 for movement about a respective hinge axis 19 between a working position as shown in the drawings, and an upwardly extending transport position (not shown) in which the mower units 14 are inwardly folded to a transport position of reduced overall width of the apparatus. However, during mowing, the beam parts are solid with each other.

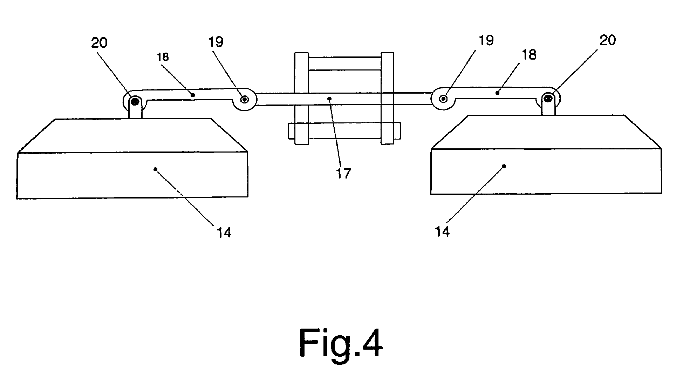

Each mower unit 14 is suspended by a horizontal pivot 20 extending in the travelling direction, as shown in Figure 4, and therefore is able to follow the ground surface and carry out any minor oscillating movement while carrying out a mowing operation.

The mower support frame 10 of the invention is constructed in such a way that it is able to maintain the mower unit(s) 14 in engagement with the ground during mowing and with part only of the weight of the mower unit supported by the ground. However, any upward or downward movement of the mower unit (as it follows the ground) will be transmitted into corresponding movement of the transverse beam 16 so as to maintain the beam at the same height above the ground. However, part of the weight of the mower unit and its supporting structure is borne by a resilient biasing means which is described below.

Thus, in the illustrated embodiment, a resilient biasing means, designated generally by reference 21, acts between the main frame 13 and the linkage 15 in order to take part of the load of the mower unit, and maintain the beam 16 at a substantially constant height above the ground.

The biassing means comprises a powerful tension spring extending downwardly and rearwardly i.e. obliquely between an upper connection point 22 and a lower connection point 23, and which exerts a substantially constant lifting force, for any upward or downward movement of the beam 16 and the linkage 15.

The parallelogram linkage 15 is formed by two four-bar linkages, spaced apart transversely of the direction of travel, and in which each four-bar linkage is formed by a first forward upright frame member 24 which forms part of the main frame 13, upper and lower rearwardly extending links 25 and 26 each pivotally connected at their forward ends to the first forward upright frame member 24, and a second upright frame member 27 to which the rear ends of the upper and lower links 25 and 26 are pivotally connected also.

The transverse beam 16 is secured to the rear upright frame member 27, and projects laterally to each side of the axis of the propelling vehicle via outward connecting parts 18 described above, each of which permits a respective mower unit 14 to be suspended therefrom, one on each side of the general axis of the propelling vehicle.

The tension spring 21 therefore holds the parallelogram linkage 15 and beam 16 at a constant height above the ground, while at the same time applying a substantially constant lifting force to the mower unit so that the latter remains in contact with the ground even when the ground surface undulates.

The support frame 10 also has a "breakaway" feature, and which is preferably provided by a lost motion connection between the linkage 15 and the main frame 13, which allows limited rearward movement of the transverse beam 16 relative to the main frame 13 when either one of the mower units 14 hits an obstacle.

In the illustrated embodiment, the lost motion connection is incorporated into the rear pivot connection of the lower link 26 to the rear upright frame member 27, and which permits the mower unit which hits an obstacle to carry out a rearward turning movement, and thereby minimise the risk of damage. The lost motion connection is shown taking the form of a slot 28 along which rear connection point 23 (which also forms a pivot for the linkage) can slide in order to allow limited turning movement of the mower unit which hits the obstacle.

A biassing arrangement is provided to apply a restoring force to the pivot 23, so that the transverse beam 16 can resume its original position after the obstacle has been passed. Conveniently, the same tension spring (which is used to maintain the mower unit in light engagement with the ground) is arranged also to provide the restoring force. It is for this reason that the spring 21 extends downwardly and obliquely rearwardly, so that it is capable of exerting both an upward lifting force to the parallelogram linkage 15, but is also capable of resisting lengthwise sliding movement of pivot 23 in slot 28 of the lost motion connection.

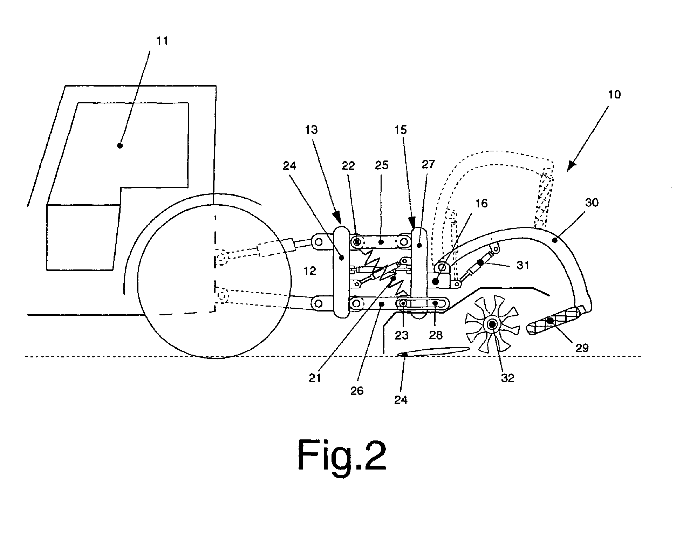

Each mower unit 14 has a transversely extending swath belt 29 associated therewith and which also is mounted directly on the transverse beam 16, so that the transverse beam maintains in the mower unit in light-weight engagement with the ground and also sets the mower unit 14 the associated swath belt 29 at a required height above the ground. Swath belt 29 is therefore mounted on the outboard end of the connecting part 18 of transverse beam 16, as can be seen in Figures 1 and 2. An adjusting cylinder 31 may adjust the height setting of the swath belt 29 above the ground, and typically the ground clearance may be set at about 15cm. Also, the swath belt may be supported (in addition to support by cylinder 31) by a spring arrangement.

The mower unit 14 may also incorporate a rearwardly mounted rotary conditioner 32.

In a typical gang mower assembly, utilising a mower support frame according to the invention, there will be one forwardly mounted mower unit, and a trailing pair of laterally offset rear or wing mower units. Each has an associated swath belt, and which can be inoperative, or operated to discharge the mown crop to one side or the other, as required.

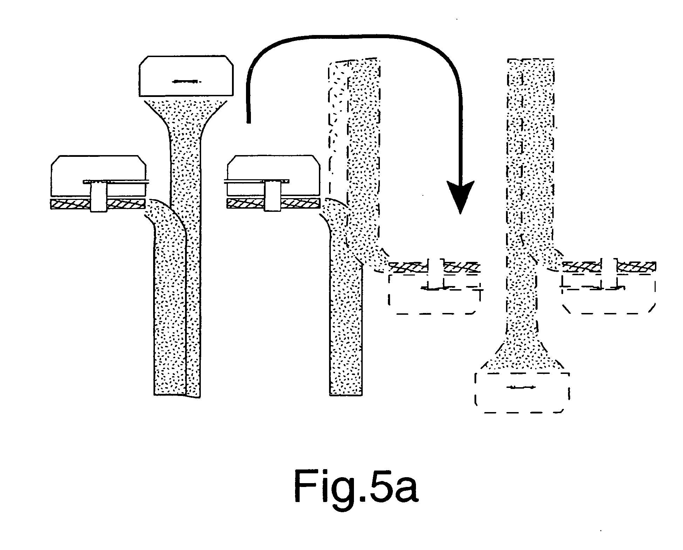

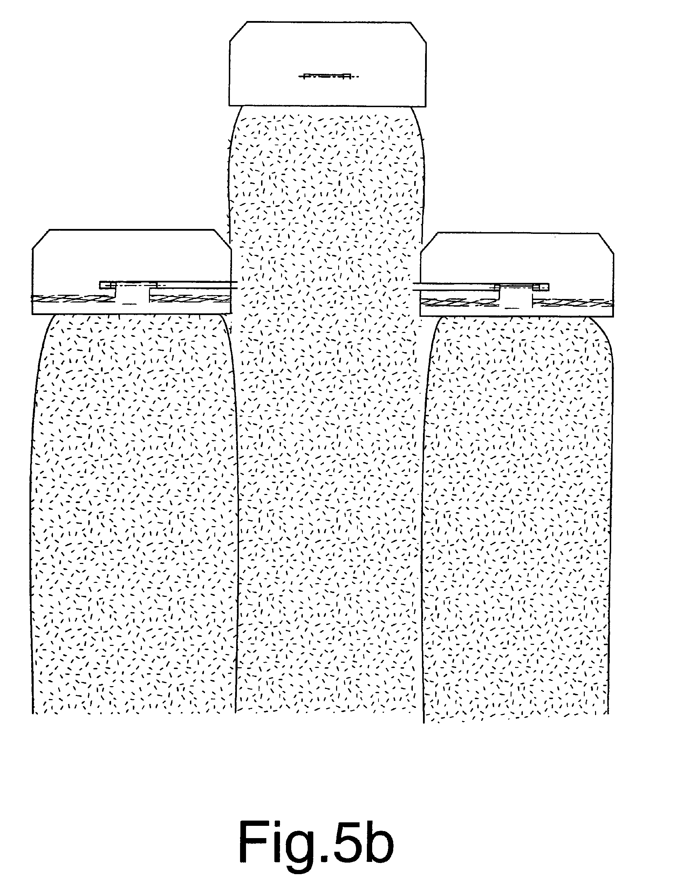

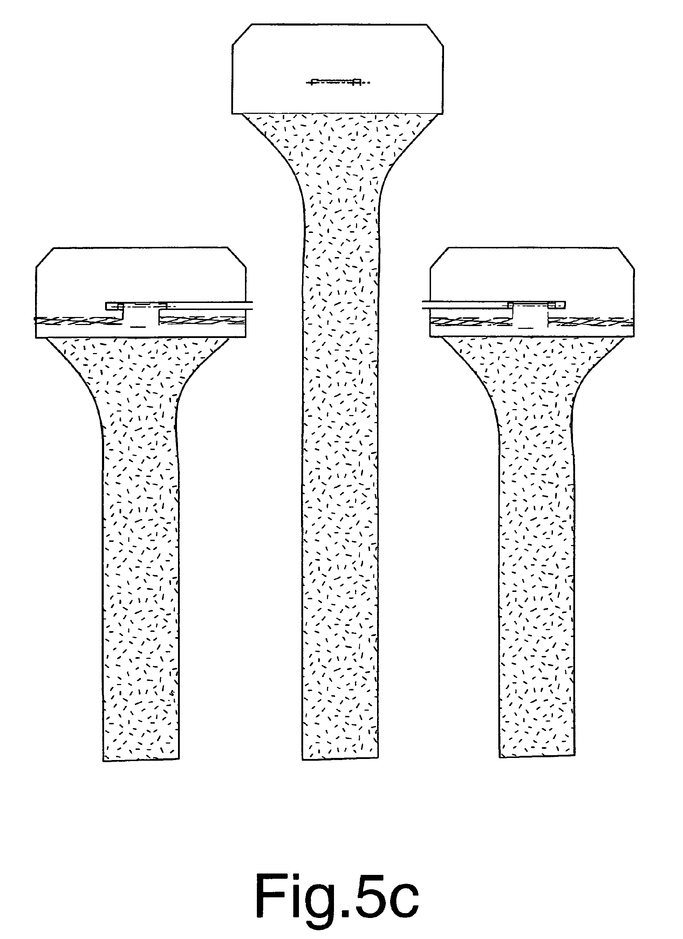

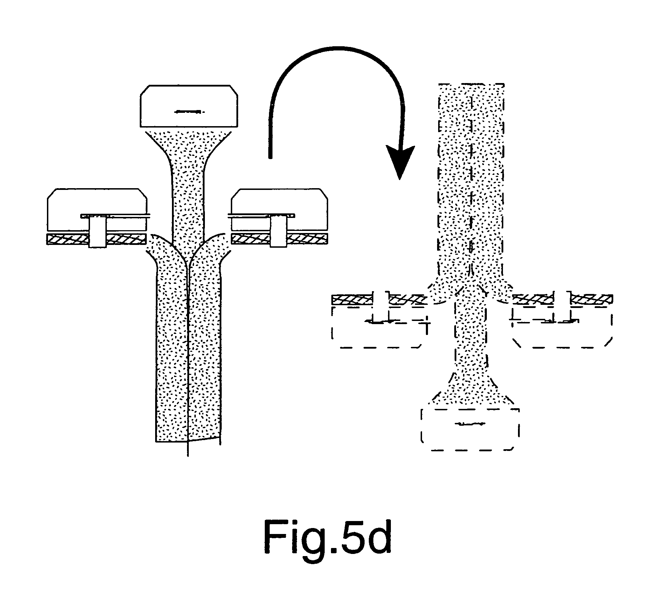

Figures 5a, b, c and d show different patterns of swath which can be distributed on the ground by the gang mower assembly, depending upon the mode of adjustment of the respective swath belts.

Preferably, at least some of the pivot joints (22 of the linkage) are universal joints to provide freedom of motion about more than one axis so that the beam 16 can pivot about a substantially horizontal axis extending in the direction of travel.

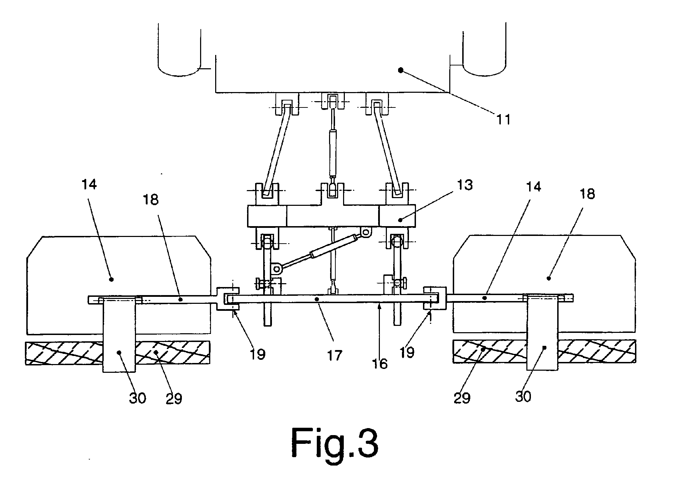

A side shift adjuster may be provided, taking the form of hydraulic adjuster 33 (Figure 3) acting between main frame 13 and one of the rear upright frame members 27, and which allows lateral adjustment of the beam 16 and the mower units 14, via the universal joints 22 and parallelogram type linkage as seen in plan view of Figure 3.

The resilient biassing arrangement illustrated therefore maintains the (disc) mower unit(s) 14 (specifically its mower or cutter bar) in light but firm engagement with the ground, and with feedback from the mower units maintains the beam at a constant height above the ground. In a typical arrangement, assuming a weight of mower unit and associated support frame components of 900kg, the spring 21 takes-up approximately 700kg of the load and leaving 200kg of the load borne by the ground via engagement of the mower unit with the ground.

## Claims

1. A mower support frame (10) for mounting on a tractor or other propelling vehicle (11) which is provided with a mounting frame (12) to which the support frame (10) can be connected, in which the support frame comprises:
a main frame (13) which is adapted to be mounted on said mounting frame (12);
a mower unit (14) suspended from the main frame (13) and engageable with the ground so as to have part of the weight of the mower unit supported by the ground during mowing;
a parallelogram linkage (15) connected to the main frame (13) and which is upwardly and downwardly adjustable relative to the main frame;
a transverse beam (16) fixed to the parallelogram linkage (15) for movement therewith, and from which the mower unit (14) is suspended; and
a resilient biasing means (21) acts between the main frame (13) and the linkage (15) in order to maintain the mower unit (14) in light-weight engagement with the ground, with less than its full weight:
**characterised in that** the mower unit (14) has a transversely extending swath belt (29) associated therewith, which is directly mounted on the transverse beam (16), so that in use the working height of the transverse beam (16) and the swath belt (29) is maintained by the ground engagement of the mower unit (14).

2. A mower support frame according to claim 1, in which the mounting of the swath belt (29) on the beam (16) includes resilient means.

3. A mower support frame according to claim 1 or 2, in which two wing mower units (14) are mounted on a common transverse beam (16), which controls the engagement of both units (14) with the ground, each mower unit having a respective swath belt (29) associated therewith.

4. A mower support frame according to claim 1, 2 or 3, in which the parallelogram linkage (15) is formed by two four-bar linkages, spaced apart transversely of the direction of travel, in which each four-bar linkage is formed by a forward first upright frame member (24) which forms part of the main frame (13), upper and lower rearwardly extending links (25, 26) each pivotally connected at their forward ends to the first upright frame member (24), and a rearward second upright frame member (27) to which the rear ends of the upper and lower links (25, 26) are pivotally connected.

5. A mower support frame according to claim 4, in which the transverse beam (16) is secured to the rearward second upright frame member(s) 27 of the two four-bar linkages, and when two mower units (14) are provided, the transverse beam (16) projects laterally to each side via side beam parts (18) to permit a respective mower unit (14) to be suspended from each side beam part (18).

6. A mower support frame according to claim 3, in which two separate rear upright frame members (27) of the two four-bar linkages are replaced by a single composite frame structure.

7. A mower support frame according to any one of the preceding claims, in which the resilient biassing means (21) takes the form of a powerful tension spring (21).

8. A mower support frame according to any one of the preceding claims, including a break-away feature arranged to allow limited rearward movement of the transverse beam (16) relative to the main frame (13) when a mower unit (14) hits an obstacle.

9. A mower support frame according to claim 8, in which a lost motion connection (23, 28) is provided between the linkage (15) and the main frame (13), to allow limited rearward movement of the transverse beam (16).

10. A mower support frame according to claim 9, in which the lost-motion connection (23,28) is incorporated into the rear pivot connection of the lower link (26) to the rear second upright frame member (27).

11. A mower support frame according to claim 10, including a biasing arrangement provided to apply a restoring force so that the transverse beam (16) can resume its original position after the obstacle has been passed.

12. A mower support frame according to claim 11, when appendant to claim 7, in which the tension spring (21) is arranged between the main frame (13) and the linkage (15) in such a way that it also provides the restoring force for the lost motion connection (23, 28).

13. A mower support frame according to claim 12, in which the spring (21) extends obliquely between the forward upper pivot (22) of the upper link (25) and the lower rear pivot (23) of the lower link (26) of each four-bar linkage.

14. A mower support frame according to claim 13, in which a single spring (21) is effective to maintain the ground engagement of the mower unit (14), and also provides the restoring force for either or both of the lost motion connections (23, 28).

15. A mower support frame according to any one of the preceding claims, in which a three part transverse beam structure (16, 18) is provided, having a central part (16) which is mounted on the rear upright frame member (27), and two outwardly extending parts (18) each hingedly connected to the central part (16).

16. A mower support frame according to claim 15, in which each hinge axis (19) extends parallel to the direction of travel, and also to the surface of the ground over which the support frame travels, and the beam parts (18) can be upwardly pivoted to transport positions, whereby the two mower units (14) can pivot inwardly to a transport position of reduced overall width.

17. A mower support frame according to any one of the preceding claims, in which the main frame (13) is adapted to be mounted directly on a three point linkage (I2) at the rear of a tractor or other propelling vehicle (11).

18. A mower support frame according to any one of the preceding claims, in which a gang mower assembly is provided, comprising a single forward mower unit, and a trailing pair of laterally offset mower units (14), with the forward mower unit (14) adapted to be mounted on the forward end of the tractor or propelling vehicle (11), and two rear mower units (14) adapted to be mounted on the rear of the tractor or propelling vehicle via the support frame of the invention.

19. A mower support frame according to claim 18, in which the front mower unit is adapted to be mounted on the forward end of the tractor (11) via a support frame according to the invention.

20. A mower support frame according to any one of the preceding claims, in which the or each mower unit (14) has an associated swath belt (29), which can be operated in a number of different modes, in order to provide different spreading arrangements of mown crop.

21. A mower support frame according to claim 4, in which the four bar linkages of the parallelogram linkage (15) include pivot connections formed by ball joints or universal joints.

22. A mower support frame according to any one of the preceding claims, including a lateral shift arrangement (33) acting between the main frame (13) and the linkage (15), or support frame 10.

23. A mower support frame means according to any one of the preceding claims, in which the or each mower unit (14) has an associated swath belt (29) which is mounted on said transverse beam (16).

24. A mower support frame according to claim 23, in which the mounting of the swath belt (29) on the beam (16) includes a resilient means.

## Patentansprüche

1. Mäherträgerahmen (10) zum Anbringen an einem Traktor oder an einem anderen Zugfahrzeug (11), welches mit einem Befestigungsrahmen (12) ausgestattet ist, mit dem der Tragerahmen (10) verbunden werden kann, wobei der Tragerahmen umfasst:
einen Hauptrahmen (13), welcher ausgelegt ist, um am Befestigungsrahmen (12) angebracht zu werden;
eine Mähereinheit (14), welche am Hauptrahmen (13) aufgehängt ist und mit dem Boden in Eingriff gebracht werden kann, um so einen Teil des Gewichts der Mähereinheit durch den Boden während des Mähens getragen zu haben;
ein Parallelogrammgestänge (15), welches mit dem Hauptrahmen (13) verbunden ist und welches nach oben und nach unten relativ zum Hauptrahmen anpassbar ist;
einen Querträger (16), welcher am Parallelogrammgestänge (15) zur Bewegung mit diesem befestigt ist und von welchem die Mähereinheit (14) aufgehängt ist; und
ein elastisches Vorspannmittel (21) wirkt zwischen dem Hauptrahmen (13) und dem Gestänge (15), um die Mähereinheit (14) in leichtgewichtigem Eingriff mit dem Boden zu halten, nämlich mit weniger als ihrem vollen Gewicht;
**dadurch gekennzeichnet, dass** die Mähereinheit (14) eine sich quer erstreckende Mähschwadenschürze (29), die ebendort angefügt ist, aufweist, welche direkt auf dem Querträger (16) angebracht ist, so dass im Einsatz die Arbeitshöhe des Querträgers (16) und der Mähschwadenschürze (29) durch den Eingriff am Boden der Mähereinheit (14) beibehalten wird.

2. Mäherträgerahmen nach Anspruch 1, in welchem die Befestigung der Mähschwadenschürze (29) am Träger (16) ein elastisches Mittel umfasst.

3. Mäherträgerahmen nach Anspruch 1 oder 2, in welchem zwei Flügelmähereinheiten (14) auf einem gemeinsamen Querträger (16) angebracht sind, der den Eingriff der beiden Einheiten (14) mit dem Boden steuert, wobei jede Mähereinheit eine jeweilige Mähschwadenschürze (29), die diesem beigefügt ist, aufweist.

4. Mäherträgerahmen nach Anspruch 1, 2 oder 3, in welchem das Parallelogrammgestänge (15) durch zwei Vier-Stab-Gestänge ausgebildet ist, die quer zur Fahrtrichtung beabstandet sind, in welchem jedes Vier-Stab-Gestänge durch ein vorderes erstes aufrechtes Rahmenelement (24), das einen Teil des Hauptrahmens (13) bildet, obere und untere sich nach hinten erstreckende Verbindungsglieder (25, 26), wobei jedes drehbar an seinem vorderen Ende mit dem ersten aufrechten Rahmenelement (24) verbunden ist, und ein hinteres zweites aufrechtes Rahmenelement (27) ausgebildet ist, an dem die hinteren Enden der oberen und unteren Verbindungsglieder (25, 26) drehbar verbunden sind.

5. Mäherträgerahmen nach Anspruch 4, in welchem der Querträger (16) an dem(den) hinteren zweiten aufrechten Rahmenelement(en) (27) der zwei Vier-Stab-Gestänge befestigt ist und, wenn zwei Mähereinheiten (14) vorgesehen sind, der Querträger (16) seitlich an jeder Seite über die Seitenträgerteile (18) vorragt, um eine jeweilige Mähereinheit (14) vom jedem Seitenträgerteil (18) tragen zu lassen.

6. Mäherträgerahmen nach Anspruch 3, in welchem zwei getrennte aufrechte Rahmenelemente (27) der zwei Vier-Stab-Gestänge durch eine einzelne Verbundrahmenstruktur ersetzt werden.

7. Mäherträgerahmen nach jedem der vorangehenden Ansprüche, in welchem das elastische Vorspannmittel (21) in der Form einer starken Zugfeder (21) vorliegt.

8. Mäherträgerahmen nach jedem der vorangehenden Ansprüche, welcher eine Ausbrecheigenschaft umfasst, die so angeordnet ist, um eine begrenzte Bewegung nach hinten des Querträgers (16) relativ zum Hauptrahmen (13) zu ermöglichen, wenn eine Mähereinheit (14) an ein Hindernis stößt.

9. Mäherträgerahmen nach Anspruch 8, in welchem eine Totgangverbindung (23, 28) zwischen dem Gestänge (15) und dem Hauptrahmen (13) vorgesehen ist, um eine begrenzte Bewegung des Querträgers (16) nach hinten zu erlauben.

10. Mäherträgerahmen nach Anspruch 9, in welchem die Totgangverbindung (23, 28) in der hinteren Schwenkverbindung des unteren Gestänges (26) mit dem hinteren zweiten aufrechten Rahmenelement (27) eingebaut ist.

11. Mäherträgerahmen nach Anspruch 10, welcher eine Vorspannanordnung umfasst, die vorgesehen ist, um eine Rückstellkraft anzulegen, so dass der Querträger (16) seine ursprüngliche Position einnehmen kann, nachdem das Hindernis überwunden worden ist.

12. Mäherträgerahmen nach Anspruch 11, wenn an Anspruch 7 angehängt, in welchem die Zugfeder (21) zwischen dem Hauptrahmen (13) und dem Gestänge (15) auf solch eine Weise angeordnet ist, dass sie auch die Rückstellkraft für die Totgangverbindung (23, 28) bereit stellt.

13. Mäherträgerahmen nach Anspruch 12, in welchem die Feder (21) sich schräg zwischen dem vorderen oberen Drehzapfen (22) des oberen Gestänges (25) und dem unteren hinteren Drehzapfen (23) des unteren Gestänges (26) jedes Vier-Stab-Gestänges erstreckt.

14. Mäherträgerahmen nach Anspruch 13, in welchem eine einzelne Feder (21) wirksam ist, um den Bodeneingriff der Mähereinheit (14) aufrecht zu erhalten, und sie auch die Rückstellkraft für jede der beiden als auch für beide Totgangverbindungen (23, 28) bereit stellt.

15. Mäherträgerahmen nach jedem der vorangehenden Ansprüche, in welchem eine dreiteilige Querträgerstruktur (16, 18) bereit gestellt wird, die einen mittigen Teil (16) aufweist, welcher auf dem hinteren aufrechten Rahmenelement (27) angebracht ist, und zwei sich nach außen erstreckende Teile (18), wobei jeder mit Scharnieren mit dem mittigen Teil (16) verbunden ist.

16. Mäherträgerahmen nach Anspruch 15, in welchem jede Scharnierachse (19) sich parallel zur Fahrtrichtung und auch zur Oberfläche des Bodens erstreckt, über den der Tragerahmen fährt, und die Trägerteile (18) nach oben in Transportpositionen geschwenkt werden können, wobei die zwei Mähereinheiten (14) nach innen in eine Transportposition von verringerter Gesamtbreite schwenken können.

17. Mäherträgerahmen nach jedem der vorangehenden Ansprüche, in welchem der Hauptrahmen (13) ausgelegt ist, um direkt auf einem Dreipunkt-Gestänge (12) an der Hinterseite des Traktors oder eines anderen Zugfahrzeugs (11) angebracht zu werden.

18. Mäherträgerahmen nach jedem der vorangehenden Ansprüche, in welchem ein Gruppenmäherzusammenbau bereit gestellt wird, der eine einzelne vordere Mähereinheit und ein angehängtes Paar von seitlich versetzten Mähereinheiten (14) umfasst, wobei die vordere Mähereinheit (14) ausgelegt ist, um am vorderen Ende des Traktors oder des Zugfahrzeugs (11) angebracht zu sein, und die zwei hinteren Mähereinheiten (14) ausgelegt sind, um hinten am Traktor oder Zugfahrzeug mittels des Tragerahmens der Erfindung angebracht zu sein.

19. Mäherträgerahmen nach Anspruch 18, in welchem die vordere Mähereinheit ausgelegt ist, um am vorderen Ende des Traktors (11) mittels eines Tragerahmens nach der Erfindung angebracht zu sein.

20. Mäherträgerahmen nach jedem der vorangehenden Ansprüche, in welchem die oder jede Mähereinheit (14) eine zugeordnete Mähschwadenschürze (29) aufweist, die in einer Anzahl von unterschiedlichen Weisen betrieben werden kann, um unterschiedliche Ausbreitungsanordnungen gemähten Getreides bereit stellen zu können.

21. Mäherträgerahmen nach Anspruch 4, in welchem die Vier-Stab-Gestänge des Parallelogrammgestänges (15) Drehverbindungen umfassen, die durch Kugelgelenke oder Kreuzgelenke ausgebildet sind.

22. Mäherträgerahmen nach jedem der vorangehenden Ansprüche, umfassend eine seitliche Verschiebungsanordnung (33), die zwischen dem Hauptrahmen (13) und dem Gestänge (15) oder Tragerahmen (10) wirkt.

23. Mäherträgerahmen nach jedem der vorangehenden Ansprüche, in welchem die oder jede Mähereinheit (14) eine beigefügte Mähschwadenschürze (29) aufweist, die auf dem Querträger (16) angebracht ist.

24. Mäherträgerahmen nach Anspruch 23, in welchem die Anbringung der Mähschwadenschürze (29) auf dem Träger (16) ein elastisches Mittel umfasst.

## Revendications

1. Châssis de support de faucheuse (10) destiné à être monté sur un tracteur ou un autre véhicule de propulsion (11) qui est muni d'un châssis de montage (12) auquel le châssis de support (10) peut être relié, dans lequel le châssis de support comprend :
un châssis principal (13) qui est adapté pour être monté sur ledit châssis de montage (12),
une unité de chauffage (14) suspendue à partir du châssis principal (13) et pouvant venir en contact avec le sol de manière à avoir une partie du poids de l'unité de chauffage supportée par le sol pendant un fauchage,
une transmission en parallélogramme (15) reliée au châssis principal (13) et qui peut être ajustée vers le haut et vers le bas par rapport au châssis principal,
une poutre transversale (16) fixée sur la transmission en parallélogramme (15) pour se déplacer avec celle-ci, et à partir de laquelle l'unité de chauffage (14) est suspendue, et
des moyens élastiques de rappel (21) agissant entre le châssis principal (13) et la transmission (15) afin de maintenir l'unité de fauchage (14) en contact léger avec le sol, plus petit que son poids total :
**caractérisé en ce que** l'unité de fauchage (14) a une courroie pour andain s'étendant transversalement (29) associée à celle-ci, qui est directement montée sur la poutre transversale (16), de sorte qu'en utilisation la hauteur active de la poutre transversale (16) et de la courroie pour andain (29) est maintenue par le contact avec le sol de l'unité de fauchage (14).

2. Châssis de support de faucheuse selon la revendication 1, dans lequel le montage de la courroie pour andain (29) sur la poutre (16) comporte des moyens élastiques.

3. Châssis de support de faucheuse selon la revendication 1 ou 2, dans lequel deux unités de fauchage latérales (14) sont montées sur une poutre transversale commune (16), qui commande le contact des deux unités (14) avec le sol, chaque unité de fauchage ayant une courroie pour andain respective (29) associée à celle-ci.

4. Châssis de support de faucheuse selon la revendication 1, 2 ou 3, dans lequel la transmission en parallélogramme (15) est formée par deux transmissions à quatre barres, écartées transversalement par rapport à la direction de déplacement, dans lequel chaque transmission à quatre barres est formée par un premier élément de châssis vertical avant (24) qui forme une partie du châssis principal (13), des biellettes supérieure et inférieure s'étendant vers l'arrière (25, 26) reliées chacune de manière pivotante à leurs extrémités avant sur le premier élément de châssis vertical (24), et un second élément de châssis vertical arrière (27) sur lequel les extrémités arrière des biellettes supérieure et inférieure (25, 26) sont reliées de manière pivotante.

5. Châssis de support de faucheuse selon la revendication 4, dans lequel la poutre transversale (16) est fixée sur le second élément (les seconds éléments) de châssis vertical arrière (27) des deux transmissions à quatre barres, et lorsque deux unités de fauchage (14) sont agencées, la poutre transversale (16) fait saillie latéralement de chaque côté via des parties de poutre latérales (18) pour permettre de suspendre une unité de fauchage respective (14) à partir de chaque partie de poutre latérale (18).

6. Châssis de support de faucheuse selon la revendication 3, dans lequel deux éléments de châssis verticaux arrière séparés (27) des deux transmissions à quatre barres sont remplacés par une seule structure de châssis composite.

7. Châssis de support de faucheuse selon l'une quelconque des revendications précédentes, dans lequel les moyens élastiques de rappel (21) prennent la forme d'un ressort de tension puissant (21).

8. Châssis de support de faucheuse selon l'une quelconque des revendications précédentes, comportant une caractéristique de dégagement agencée pour permettre un mouvement vers l'arrière limité de la poutre transversale (16) par rapport au châssis principal (13) lorsqu'une unité de fauchage (14) heurte un obstacle.

9. Châssis de support de faucheuse selon la revendication 8, dans lequel une liaison à mouvement perdu (23, 28) est agencée entre la transmission (15) et le châssis principal (13), pour permettre un mouvement vers l'arrière limité de la poutre transversale (16).

10. Châssis de support de faucheuse selon la revendication 9, dans lequel la liaison à mouvement perdu (23, 28) est incorporée dans la liaison à pivot arrière de la biellette inférieure (26) avec le second élément de châssis vertical arrière (27).

11. Châssis de support de faucheuse selon la revendication 10, comportant un agencement de rappel agencé pour appliquer une force de restauration de sorte que la poutre transversale (16) peut reprendre sa position d'origine après que l'obstacle ait été dépassé.

12. Châssis de support de faucheuse selon la revendication 11, lorsqu'elle dépend de la revendication 7, dans lequel le ressort de tension (21) est agencé entre le châssis principal (13) et la transmission (15) de manière telle qu'il fournit aussi la force de restauration pour la liaison à mouvement perdu (23, 28).

13. Châssis de support de faucheuse selon la revendication 12, dans lequel le ressort (21) s'étend en oblique entre le pivot supérieur avant (22) de la biellette supérieure (25) et le pivot inférieur arrière (23) de la biellette inférieure (26) de chaque transmission à quatre barres.

14. Châssis de support de faucheuse selon la revendication 13, dans lequel un ressort unique (21) est efficace pour maintenir le contact avec le sol de l'unité de fauchage (14), et fournit aussi la force de restauration pour l'une ou l'autre des liaisons à mouvement perdu ou les deux (23, 28).

15. Châssis de support de faucheuse selon l'une quelconque des revendications précédentes, dans lequel une structure de poutre transversale en trois parties (16, 18) est fournie, comportant une partie centrale (16) qui est montée sur l'élément de châssis vertical arrière (27), et deux parties s'étendant vers l'extérieur (18) chacune étant reliée de manière articulée à la partie centrale (16).

16. Châssis de support de faucheuse selon la revendication 15, dans lequel chaque axe d'articulation (19) s'étend parallèlement à la direction de déplacement, et aussi à la surface du sol sur lequel se déplace le châssis de support, et les parties de poutre (18) peuvent pivoter vers le haut, vers des positions de transport, de sorte que les deux unités de fauchage (14) peuvent pivoter vers l'intérieur jusqu'à une position de transport ayant une largeur globale réduite.

17. Châssis de support de faucheuse selon l'une quelconque des revendications précédentes, dans lequel le châssis principal (13) est adapté pour être monté directement sur un attelage trois points (12) situé à l'arrière d'un tracteur ou d'un autre véhicule de propulsion (11).

18. Châssis de support de faucheuse selon l'une quelconque des revendications précédentes, dans lequel un ensemble de faucheuse multiple est fourni, comprenant une seule unité de fauchage avant, et une paire d'unités de fauchage arrière latéralement décalées (14), l'unité de fauchage avant (14) étant adaptée pour être montée sur l'extrémité avant du tracteur ou du véhicule de propulsion (11), et les deux unités de fauchage arrière (14) étant adaptées pour être montées sur l'arrière du tracteur ou du véhicule de propulsion via le châssis de support de l'invention.

19. Châssis de support de faucheuse selon la revendication 18, dans lequel l'unité de fauchage avant est adaptée pour être montée sur l'extrémité avant du tracteur (11) via un châssis de support selon l'invention.

20. Châssis de support de faucheuse selon l'une quelconque des revendications précédentes, dans lequel le ou chaque unité de fauchage (14) a une courroie pour andain associée (29), qui peut être actionnée selon plusieurs modes différents, afin de fournir des agencements de dispersion différents de la récolte fauchée.

21. Châssis de support de faucheuse selon la revendication 4, dans lequel les transmissions à quatre barres de la transmission en parallélogramme (15) comprennent des liaisons à pivot formées par des articulations à bille ou des joints de cardan.

22. Châssis de support de faucheuse selon l'une quelconque des revendications précédentes, comportant un agencement de décalage latéral (33) agissant entre le châssis principal (13) et la transmission (15), ou le châssis de support (10).

23. Des moyens pour un châssis de support de faucheuse selon l'une quelconque des revendications précédentes, dans lequel le ou chaque unité de fauchage (14) a une courroie pour andain associée (29) qui est montée sur ladite poutre transversale (16).

24. Châssis de support de faucheuse selon la revendication 23, dans lequel le montage de la courroie pour andain (29) sur la poutre (16) comporte des moyens élastiques.
